# EUROPEAN PATENT SPECIFICATION

(11) **EP 4 400 334 B1**
(45) Date of publication and mention of the grant of the patent: **04.03.2026**
(21) Application number: 24151379.5
(22) Date of filing: 11.01.2024
(51) Int. Cl.: B60C 11/03, B60C 11/12, B60C 11/13

(54) **TIRE**
REIFEN
PNEUMATIQUE

(30) Priority: 12.01.2023 JP 2023003304
(43) Date of publication of application: 17.07.2024
(73) Proprietor: Sumitomo Rubber Industries, Ltd., Kobe-shi, Hyogo-ken 651-0072 (JP)
(72) Inventor: NOGUCHI, Yoshihisa, Kobe-shi 651-0072 (JP)
(74) Representative: Manitz Finsterwald Patent- und Rechtsanwaltspartnerschaft mbB

(56) References cited:
- EP-B1- 2 987 655
- EP-B1- 3 284 617
- CN-B- 105 960 338
- DE-A1- 102020 214 363
- JP-A- 2019 131 150

## Description

### BACKGROUND OF THE INVENTION

### Field of the Invention

The present invention relates to a tire suitable for running on muddy terrain.

### Background Art

Hitherto, a tire in which a plurality of lateral grooves are formed on a tread portion so as to be bent in a V-shape has been known (see, for example, Japanese Laid-Open Patent Publication No. 2014-094593).

However, the tire described in Japanese Laid-Open Patent Publication No. 2014-094593 is not suitable for running on really rough terrain such as muddy terrain having a high viscosity.

CN 105 960 338 A discloses a tread for a heavy-duty vehicle tire provided with two main circumferential grooves dividing the tread into a middle region and two side regions axially to either side of the middle region. The middle region comprises a plurality of transverse sipes, the depth of which is at least equal to the depth of the main grooves and opening into these grooves. Related tires are described in EP 2 987 655 B1, DE 10 2020 214363 A1, JP 2019 131150 A and EP 3 284 617 B1.

The present invention has been made in view of the above circumstances, and a main object of the present invention is to provide a tire suitable for running on paved roads and on rough terrain.

### SUMMARY OF THE INVENTION

The object is solved by a tire having the features of claim 1. Sub-claims are directed at preferable embodiments of the invention.

The present invention is directed to a tire including a tread portion, wherein
the tread portion includes a plurality of lateral grooves crossing a tire equator and bent in a V-shape, and a plurality of land portions demarcated by the plurality of lateral grooves,
each of the plurality of land portions is divided by a plurality of circumferential grooves so as to include a crown block located on the tire equator and a pair of shoulder blocks located outward of the crown block in a tire axial direction,
the crown blocks include a first crown block,
a first sipe is formed on the first crown block so as to be located on the tire equator and fully traverse the first crown block in a tire circumferential direction, and
a width of each circumferential groove is larger than a width of the first sipe and smaller than a width of each lateral groove.

As a result of adopting the above configuration, the tire according to the present invention can have improved running performance on rough terrain.

### BRIEF DESCRIPTION OF THE DRAWINGS

FIG. 1 is a cross-sectional view of a tire showing one embodiment of the tire of the present invention;
FIG. 2 is a development view of a tread portion in FIG. 1;
FIG. 3 is an enlarged view of a first crown block in FIG. 2;
FIG. 4 is an enlarged view of a second crown block in FIG. 2;
FIG. 5 is an enlarged view of shoulder blocks in FIG. 2; and
FIG. 6 is a cross-sectional view of the first crown block and the second crown block including chamfered portions in FIG. 3.

### DETAILED DESCRIPTION

Hereinafter, an embodiment of the present invention will be described with reference to the drawings.

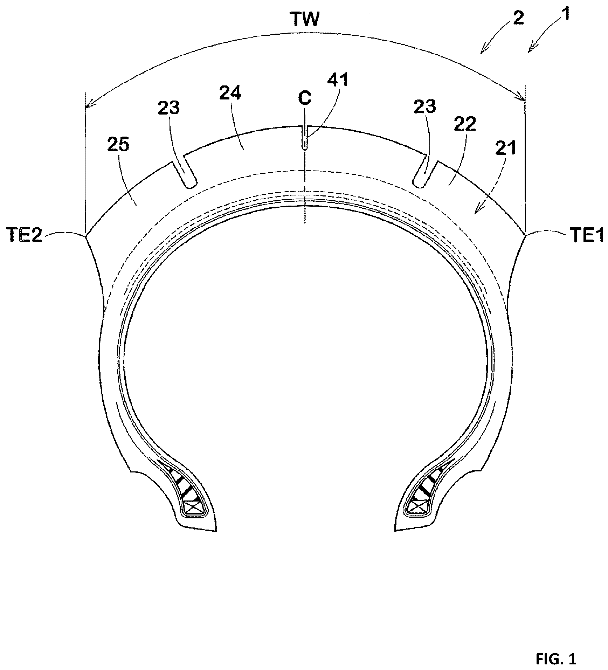

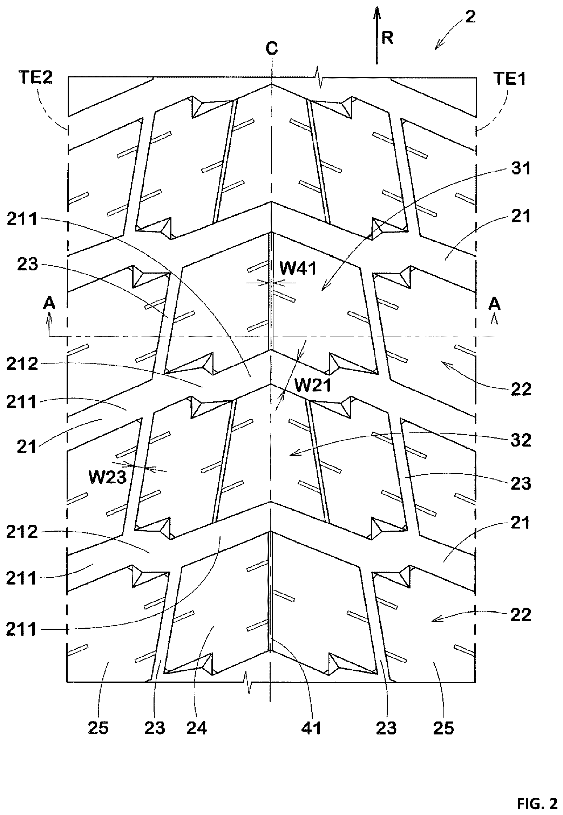

FIG. 1 is a meridian cross-sectional view, of a tire 1 of the present embodiment in a standardized state, including a tire rotation axis (not shown) (a cross-sectional view taken along a line A-A in FIG. 2 described later).

The "standardized state" is a state where the tire 1 is fitted on a standardized rim (not shown) and inflated to a standardized internal pressure and no load is applied to the tire 1. Hereinafter, unless otherwise specified, dimensions and the like of components of the tire 1 are values measured in the standardized state.

The "standardized rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. In the case where the tire 1 is for a passenger car, the standardized internal pressure is, for example, 180 kPa.

As shown in FIG. 1, the tire 1 of the present embodiment includes a tread portion 2.

In the cross-section, the outer surface of the tread portion 2 of the present embodiment is curved in an arc shape that is convex outward in the tire radial direction. Accordingly, the tire 1 of the present embodiment is suitable for use for a motorcycle, but the present invention is not limited to such use. The present invention is also applicable, for example, to a tire for a passenger car or a heavy duty tire.

FIG. 2 is a development view of the tread portion 2 of the tire 1 of the present embodiment. The tread portion 2 includes a plurality of lateral grooves 21, and a plurality of land portions 22 demarcated by the plurality of lateral grooves 21.

A width W21 of each lateral groove 21 is set to a value at which the lateral groove 21 is not closed when the standardized load is applied to the tire 1 in the standardized state. The lateral groove 21 constitutes a main groove of the tire 1.

Each lateral groove 21 crosses a tire equator C and is bent in a V-shape. Accordingly, the tread portion 2 of the tire 1 has a directional pattern having a designated tire rotation direction R.

Owing to the plurality of lateral grooves 21 being formed on the tread portion 2, the scratching effect at the edges, of the land portions 22, facing the lateral grooves 21 is enhanced, so that traction performance on muddy terrain is enhanced.

A plurality of circumferential grooves 23 are formed on each of the plurality of land portions 22. The circumferential grooves 23 traverse the land portion 22 and connect the lateral grooves 21 adjacent to each other in the tire circumferential direction. The circumferential grooves 23 are provided on both sides of the tire equator C. Accordingly, each land portion 22 is divided into a crown block 24 and a pair of shoulder blocks 25.

The crown block 24 and each shoulder block 25 are arranged with the circumferential groove 23 interposed therebetween. The crown block 24 is located on the tire equator C. The pair of shoulder blocks 25 are located outward of the crown block 24 in the tire axial direction.

A width W23 of each circumferential groove 23 is set to a value at which the circumferential groove 23 is not closed when the standardized load is applied to the tire 1 in the standardized state. The circumferential groove 23 constitutes a sub-groove of the tire 1.

The "standardized load" is a load that is defined, in a standard system including a standard on which the tire 1 is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In the case where the tire 1 is for a passenger car, the standardized load is, for example, a load corresponding to 88% of the load.

Owing to the plurality of circumferential grooves 23 being formed on each land portion 22, the scratching effect at the edges, of the crown block 24 and the shoulder blocks 25, facing the circumferential grooves 23 is enhanced, so that slide control performance on muddy terrain is enhanced.

The crown blocks 24 include first crown blocks 31 and second crown blocks 32.

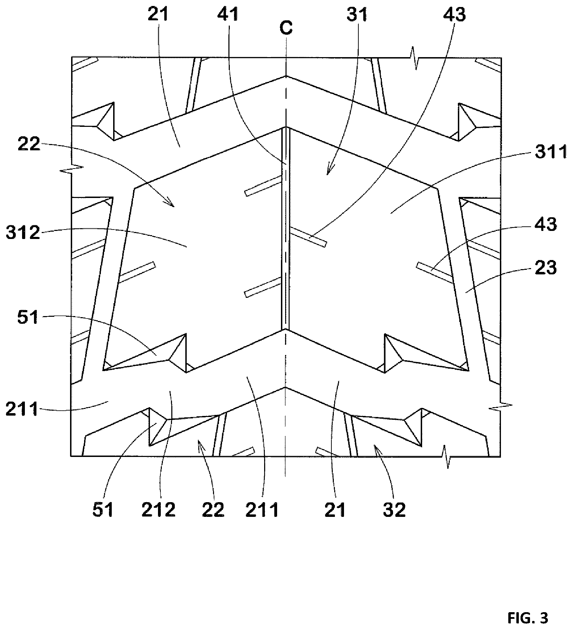

FIG. 3 shows the first crown block 31. A first sipe 41 is formed on each of the plurality of first crown blocks 31. The first sipe 41 is located on the tire equator C. The first sipe 41 fully traverses the first crown block 31 in the tire circumferential direction. That is, the first sipe 41 penetrates the first crown block 31 in the tire circumferential direction. Accordingly, the first crown block 31 is divided into a region 311 on one side and a region 312 on the other side in the tire axial direction.

A width W41 (see FIG. 2) of the first sipe 41 is set to a value at which the first sipe 41 is closed when the standardized load is applied to the tire 1 in the standardized state (hereinafter, the same applies to second sipes 42 and lateral sipes 43, 44, and 45). When the first sipe 41 is closed, the region 311 and the region 312 of the first crown block 31 which are adjacent to each other in the tire axial direction support each other. Accordingly, when a lateral force is generated at the first crown block 31, falling-down of the first crown block 31 in the tire axial direction is suppressed.

From the above viewpoint, the width W41 of the first sipe 41 is preferably not greater than 1.5 mm.

In a mode in which a circumferential groove that is not closed even when the standardized load is applied is formed on the tire equator C on each first crown block 31, the stiffness in the tire axial direction of the first crown block 31 is locally insufficient near the tire equator C, which may influence transient characteristics of transitioning from a straight running state to a cornering state on a paved road.

However, in the present embodiment, since the first sipe 41 which is closed when the standardized load is applied is formed on the tire equator C on each first crown block 31, the stiffness in the tire axial direction of the first crown block 31 is inhibited from being insufficient near the tire equator C. In addition, the first sipe 41 moderates the change in the stiffness in the tire axial direction of the land portion 22 from the tire equator C on the first crown block 31 to each shoulder block 25, resulting in good transient characteristics of transitioning from a straight running state to a cornering state on a paved road.

Owing to the first sipe 41 being formed, the scratching effect at the edges, of the region 311 and the region 312 of the first crown block 31, facing the first sipe 41 is enhanced, so that slide control performance on muddy terrain is enhanced.

The width W23 of each circumferential groove 23 shown in FIG. 2 is larger than the width W41 of the first sipe 41 and smaller than the width W21 of each lateral groove 21. Accordingly, the change in the stiffness of the land portion 22 from the tire equator C to each shoulder block 25 is moderated, resulting in good transient characteristics of transitioning from a straight running state to a cornering state. In addition, mud clogging the lateral groove 21 is easily removed during running on rough terrain, so that running performance is improved.

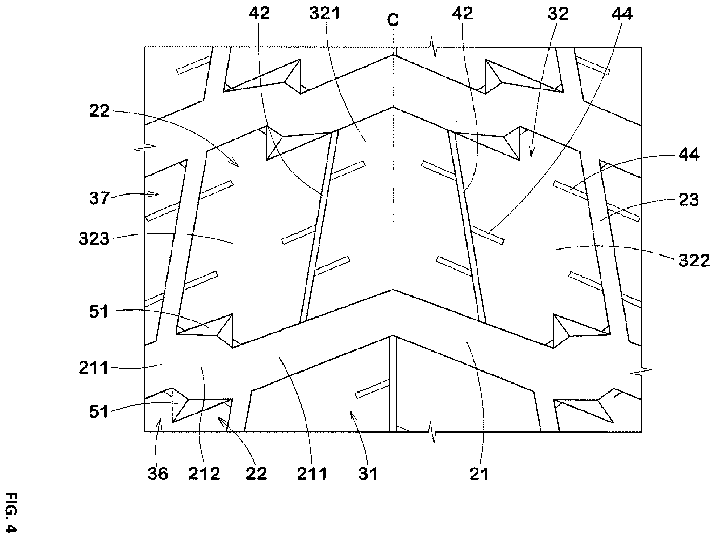

FIG. 4 shows the second crown block 32. A pair of second sipes 42 are formed on the second crown block 32 so as to extend on both sides of the tire equator C. Each of the pair of second sipes 42 fully traverses the second crown block 32 in the tire circumferential direction. That is, each second sipe 42 penetrates the second crown block 32 in the tire circumferential direction. Accordingly, the second crown block 32 is divided into a region 321 interposed between the pair of second sipes 42, and regions 322 and 323 respectively located outward of the pair of second sipes 42 in the tire axial direction. The second sipes 42 moderate the change in the stiffness in the tire axial direction of the second crown block 32, resulting in good transient characteristics of transitioning from an initial state to a medium-term state of cornering.

The first crown blocks 31 and the second crown blocks 32 are arranged alternately in the tire circumferential direction. This results in good transient characteristics of transitioning from a straight running state to a cornering state on a paved road.

The area of the tread surface of each second crown block 32 is preferably larger than that of each first crown block 31. Accordingly, the stiffness of the region 311 and the region 312 of each first crown block 31 and the region 321 and the regions 322 and 323 of each second crown block 32 is made uniform, resulting in good transient characteristics on a paved road.

As shown in FIG. 2, the plurality of lateral grooves 21 preferably extend from one tread ground-contact end TE1 to another tread ground-contact end TE2 in the tire axial direction.

In the case where the tire 1 is a tire for a motorcycle, the tread ground-contact ends TE1 and TE2 correspond to both ends in the tire axial direction of the tread portion 2, and can come into contact with the ground during cornering around a maximum camber angle, for example.

Each of the plurality of lateral grooves 21 is formed so as to fully traverse the tread portion 2 in the tire axial direction. That is, each of the plurality of lateral grooves 21 penetrates the tread portion 2 in the tire axial direction. Accordingly, the traction performance of the tire 1 is improved. In addition, mud and dirt clogging the lateral groove 21 are easily removed during running on rough terrain, so that running performance is improved.

Each of the plurality of lateral grooves 21 is preferably bent on the tire equator C. Owing to such a configuration, mud clogging the lateral groove 21 is easily removed during running on rough terrain, so that running performance is improved. In addition, the scratching effect at the edges, of the land portions 22, facing the lateral grooves 21 is enhanced, so that traction performance on muddy terrain is enhanced.

The depth of each first sipe 41 is preferably 30 to 70% of the depth of each lateral groove 21. When the depth of each first sipe 41 is not less than 30% of the depth of each lateral groove 21, the scratching effect at the edges, of the first crown block 31, facing the first sipe 41 is enhanced, so that slide control performance on muddy terrain is enhanced. When the depth of each first sipe 41 is not greater than 70% of the depth of each lateral groove 21, the scratching effect at the edges, of the land portions 22, facing the lateral grooves 21 is enhanced, so that traction performance on muddy terrain is enhanced.

In the first crown blocks 31, the second crown blocks 32, and the shoulder blocks 25, a minimum land area Fmin is preferably 40 to 80% of a maximum land area Fmax. With such a configuration, the stiffness of each block is made uniform, resulting in good transient characteristics on a paved road.

The width W21 of each lateral groove 21 is preferably 5 to 15% of a tread development width TW. The tread development width TW is the distance in the tire axial direction between the tread ground-contact ends TE1 and TE2 when the tread portion 2 is developed on a flat surface.

When the width W21 of each lateral groove 21 is not less than 5% of the tread development width TW, mud and dirt clogging the lateral groove 21 are easily removed during running on rough terrain, so that running performance is improved. When the width W21 of each lateral groove 21 is not greater than 15% of the tread development width TW, the stiffness in the tire circumferential direction of each land portion 22 is sufficiently ensured, so that running performance on a paved road surface is easily improved.

From the above viewpoint, the width W21 of each lateral groove 21 is preferably 4 to 12 mm.

The width W23 of each circumferential groove 23 is preferably 2 to 5% of the tread development width TW. When the width W23 of each circumferential groove 23 is not less than 2% of the tread development width TW, mud and dirt clogging the circumferential groove 23 are easily removed during running on rough terrain, so that running performance is improved. When the width W23 of each circumferential groove 23 is not greater than 5% of the tread development width TW, the stiffness in the tire circumferential direction of each land portion 22 is sufficiently ensured, so that running performance on a paved road surface is easily improved.

From the above viewpoint, the width W23 of each circumferential groove 23 is preferably 2 to 4 mm.

As shown in FIG. 2, the plurality of lateral grooves 21 preferably include first portions 211 inclined in a first direction, which is the tire rotation direction R, toward the inner side in the tire axial direction, and second portions 212 inclined in a second direction opposite to the first direction, toward the inner side in the tire axial direction. With such a configuration, each lateral groove 21 is formed so as to extend in a zigzag manner in the tire axial direction. The scratching effect at the edges, of the land portions 22, facing the lateral grooves 21 is enhanced, so that traction performance on muddy terrain is enhanced.

On the tread ground-contact end TE1 side, each circumferential groove 23 and each second sipe 42 are preferably inclined in the same direction as the first portions 211 of the lateral grooves 21. Similarly, on the tread ground-contact end TE2 side, each circumferential groove 23 and each second sipe 42 are preferably inclined in the same direction as the first portions 211 of the lateral grooves 21. Accordingly, mud and dirt clogging the circumferential groove 23 are easily removed during running on rough terrain, so that running performance is improved.

As shown in FIGS. 3 and 4, chamfered portions 51 are preferably formed at the groove edges of the second portions 212 in the plurality of land portions 22. The chamfered portions 51 of the present embodiment are located at a position at which each first crown block 31 and each second crown block 32 oppose each other and at a position at which each second crown block 32 and each shoulder block 25 oppose each other. Owing to the chamfered portions 51, mud and dirt clogging the lateral groove 21 are easily removed during running on rough terrain, so that running performance is improved. In addition, stress at the edges, of the land portions 22, facing the second portions 212 is alleviated, so that wear resistance is improved.

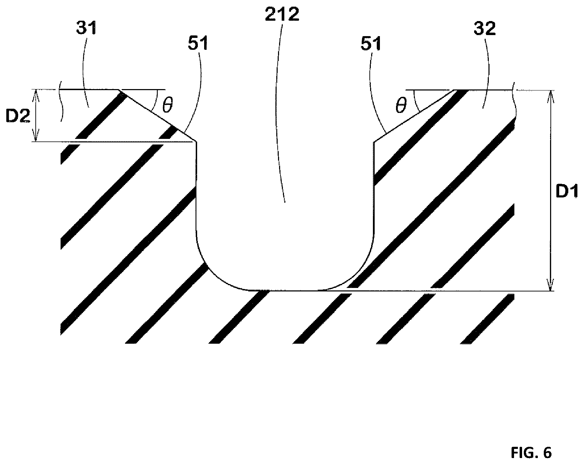

FIG. 6 shows a cross-section of the first crown block 31 and the second crown block 32 including the chamfered portions 51. Angles θ of the chamfered portions 51 with respect to the tread surfaces of the first crown block 31 and the second crown block 32 are preferably 30° to 60°.

When the angle θ of each chamfered portion 51 is not less than 30°, mud and dirt clogging the lateral groove 21 are easily removed during running on rough terrain, so that running performance is improved. When the angle θ of each chamfered portion 51 is not greater than 60°, the scratching effect at the edges, of the first crown block 31 and the second crown block 32, facing the second portion 212 is enhanced, so that traction performance on muddy terrain is enhanced.

A depth D2 of each chamfered portion 51 is preferably 10 to 40% of a depth D1 of the second portion 212. When the depth D2 of each chamfered portion 51 is not less than 10% of the depth D1 of the second portion 212, mud and dirt clogging the lateral groove 21 are easily removed during running on rough terrain, so that running performance is improved. When the depth D2 of each chamfered portion 51 is not greater than 40% of the depth D1 of the second portion 212, the stiffness of the first crown block 31 and the second crown block 32 is inhibited from being insufficient, resulting in good transient characteristics of transitioning from a straight running state to a cornering state on a paved road.

The same applies to the angles of the chamfered portions 51 with respect to the tread surfaces of each second crown block 32 and each shoulder block 25 and the depths of the chamfered portions 51 in each second crown block 32 and each shoulder block 25.

As shown in FIG. 2, the second portions 212 adjacent to each other in the tire circumferential direction are preferably arranged so as to be displaced in the tire axial direction. Owing to such a configuration, mud and dirt clogging the lateral groove 21 are easily removed during running on rough terrain, so that running performance is improved.

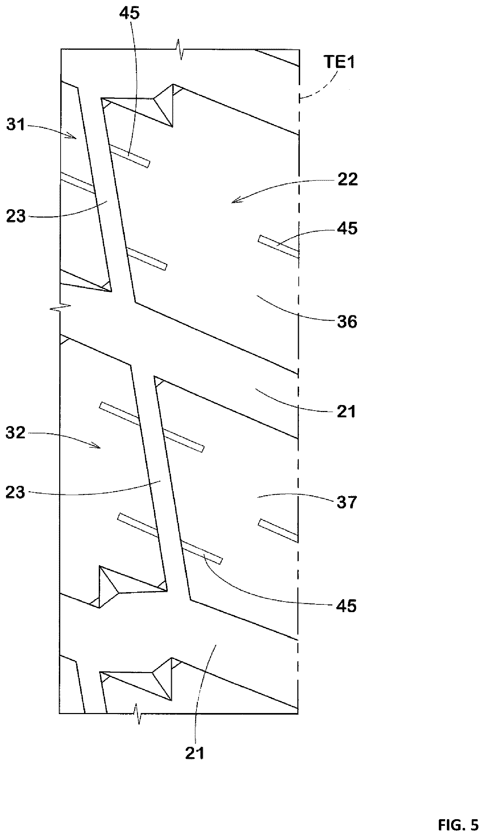

As shown in FIGS. 2 to 5, the lateral sipes 43 may be formed on the first crown blocks 31 so as to extend in the tire axial direction and be connected to the first sipe 41 and the circumferential grooves 23. In addition, the lateral sipes 44 may be formed on the second crown blocks 32 so as to extend in the tire axial direction and be connected to the second sipes 42 and the circumferential grooves 23. The lateral sipes 45 may be formed on the shoulder blocks 25 so as to extend in the tire axial direction and be connected to the circumferential groove 23 and the tread ground-contact ends TE1 and TE2.

Owing to the respective lateral sipes 43, 44, and 45, the scratching effect at each block is enhanced, so that the traction performance on muddy terrain is enhanced.

The respective lateral sipes 43, 44, and 45 preferably extend parallel to the first portions 211 of the lateral grooves 21. Accordingly, the scratching effect at each block is enhanced, so that the traction performance on muddy terrain is enhanced.

The land ratio of the tread portion 2 having the above configuration is preferably 60 to 80%. When the land ratio of the tread portion 2 is not less than 60%, running performance on a paved road is improved. When the land ratio of the tread portion 2 is not greater than 80%, traction performance on muddy terrain is enhanced.

Although the tire 1 of the present invention has been described in detail above, the present invention is not limited to the above specific embodiment, and various modifications can be made to implement the present invention within the scope of the appended claims. For example, the crown blocks 24 may be configured without including the second crown blocks 32.

## Claims

1. A tire (1) comprising a tread portion (2), wherein
the tread portion (2) includes a plurality of lateral grooves (21) crossing a tire equator (C) and bent in a V-shape, and a plurality of land portions (22) demarcated by the plurality of lateral grooves (21),
each of the plurality of land portions (22) is divided by a plurality of circumferential grooves (23) so as to include a crown block (24) located on the tire equator (C) and a pair of shoulder blocks (25) located outward of the crown block (24) in a tire axial direction,
the crown blocks (24) include a first crown block (31),
a first sipe (41) is formed on the first crown block (31) so as to be located on the tire equator (C) and fully traverse the first crown block (31) in a tire circumferential direction, and
a width (W23) of each circumferential groove (23) is larger than a width (W41) of the first sipe (41) and smaller than a width (W21) of each lateral groove (21).

2. The tire (1) according to claim 1, wherein
the width (W21) of each lateral groove (21) is 5 to 15% of a tread development width (TW), and
the width (W23) of each circumferential groove (23) is 2 to 5% of the tread development width (TW).

3. The tire (1) according to claim 1 or 2, wherein
the crown blocks (24) include a second crown block (32), and
a pair of second sipes (42) are formed on the second crown block (32) so as to extend on both sides of the tire equator (C).

4. The tire (1) according to claim 3, wherein, in the first crown block (31), the second crown block (32), and the shoulder blocks (25), a minimum land area Fmin is 40 to 80% of a maximum land area Fmax.

5. The tire (1) according to any one of claims 1 to 4, wherein the plurality of lateral grooves (21) extend from one tread ground-contact end (TE1) to another tread ground-contact end (TE2) in the tire axial direction.

6. The tire (1) according to any one of claims 1 to 5, wherein the plurality of lateral grooves (21) are bent on the tire equator (C).

7. The tire (1) according to any one of claims 1 to 6, wherein a depth of the first sipe (41) is 30 to 70% of a depth of each lateral groove (21).

8. The tire (1) according to any one of claims 1 to 7, wherein the plurality of lateral grooves (21) include first portions (211) inclined in a first direction toward an inner side in the tire axial direction, and second portions (212) inclined in a second direction opposite to the first direction, toward the inner side in the tire axial direction.

9. The tire (1) according to claim 8, wherein the plurality of land portions (22) include chamfered portions (51) at groove edges of the second portions (212).

10. The tire (1) according to claim 8 or 9, wherein the second portions (212) adjacent to each other in the tire circumferential direction are arranged so as to be displaced in the tire axial direction.

## Patentansprüche

1. Reifen (1) mit einem Laufflächenabschnitt (2), wobei
der Laufflächenabschnitt (2) eine Vielzahl von Querrillen (21), die einen Reifenäquator (C) kreuzen und in einer V-Form gebogen sind, und eine Vielzahl von Landabschnitten (22) aufweist, die durch die Vielzahl von Querrillen (21) abgegrenzt sind,
jeder der Vielzahl von Landabschnitten (22) durch eine Vielzahl von Umfangsrillen (23) so unterteilt ist, dass er einen Kronenblock (24), der sich auf dem Reifenäquator (C) befindet, und ein Paar Schulterblöcke (25) aufweist, die sich in einer Reifenaxialrichtung außen von dem Kronenblock (24) befinden,
die Kronenblöcke (24) einen ersten Kronenblock (31) aufweisen,
ein erster Feinschnitt (41) auf dem ersten Kronenblock (31) so ausgebildet ist, dass er sich auf dem Reifenäquator (C) befindet und den ersten Kronenblock (31) in einer Reifenumfangsrichtung vollständig durchquert, und
eine Breite (W23) jeder Umfangsrille (23) größer als eine Breite (W41) des ersten Feinschnitts (41) und kleiner als eine Breite (W21) jeder Querrille (21) ist.

2. Reifen (1) nach Anspruch 1, wobei
die Breite (W21) jeder Querrille (21) 5 bis 15 % einer Laufflächenabwicklungsbreite (TW) beträgt, und
die Breite (W23) jeder Umfangsrille (23) 2 bis 5 % der Laufflächenabwicklungsbreite (TW) beträgt.

3. Reifen (1) nach Anspruch 1 oder 2, wobei
die Kronenblöcke (24) einen zweiten Kronenblock (32) aufweisen, und
ein Paar zweiter Feinschnitte (42) auf dem zweiten Kronenblock (32) so ausgebildet ist, dass sie sich auf beiden Seiten des Reifenäquators (C) erstrecken.

4. Reifen (1) nach Anspruch 3, wobei in dem ersten Kronenblock (31), dem zweiten Kronenblock (32) und den Schulterblöcken (25) eine minimale Landfläche Fmin 40 bis 80 % einer maximalen Landfläche Fmax beträgt.

5. Reifen (1) nach einem der Ansprüche 1 bis 4, wobei sich die Vielzahl von Querrillen (21) von einem Laufflächen-Boden-Kontaktende (TE1) zu einem anderen Laufflächen-Boden-Kontaktende (TE2) in der Reifenaxialrichtung erstrecken.

6. Reifen (1) nach einem der Ansprüche 1 bis 5, wobei die Vielzahl von Querrillen (21) auf dem Reifenäquator (C) gebogen sind.

7. Reifen (1) nach einem der Ansprüche 1 bis 6, wobei eine Tiefe des ersten Feinschnitts (41) 30 bis 70 % einer Tiefe jeder Querrille (21) beträgt.

8. Reifen (1) nach einem der Ansprüche 1 bis 7, wobei die Vielzahl von Querrillen (21) erste Abschnitte (211), die in einer ersten Richtung zu einer Innenseite in der Reifenaxialrichtung geneigt sind, und zweite Abschnitte (212), die in einer zweiten Richtung entgegengesetzt zu der ersten Richtung zu der Innenseite in der Reifenaxialrichtung geneigt sind, aufweist.

9. Reifen (1) nach Anspruch 8, wobei die Vielzahl von Landabschnitten (22) abgeschrägte Abschnitte (51) an Rillenkanten der zweiten Abschnitte (212) aufweist.

10. Reifen (1) nach Anspruch 8 oder 9, wobei die zweiten Abschnitte (212), die in der Reifenumfangsrichtung zueinander benachbart sind, so angeordnet sind, dass sie in der Reifenaxialrichtung versetzt sind.

## Revendications

1. Pneumatique (1) comprenant une portion formant bande de roulement (2), dans lequel
la portion formant bande de roulement (2) inclut une pluralité de rainures latérales (21) franchissant un équateur de pneumatique (C) et cintrées en forme de V, et une pluralité de portions en relief (22) délimitées par la pluralité de rainures latérales (21),
chacune de la pluralité de portions en relief (22) est divisée par une pluralité de rainures circonférentielles (23) de manière à inclure un bloc de couronne (24) situé sur l'équateur de pneumatique (C) et une paire de blocs d'épaulement (25) situés à l'extérieur du bloc de couronne (24) dans une direction axiale du pneumatique,
les blocs de couronne (24) incluent un premier bloc de couronne (31),
une première fente (41) est formée sur le premier bloc de couronne (31) de manière à être située sur l'équateur de pneumatique (C) et à traverser entièrement le premier bloc de couronne (31) dans une direction circonférentielle du pneumatique, et
une largeur (W23) de chaque rainure circonférentielle (23) est supérieure à une largeur (W41) de la première fente (41) et inférieure à une largeur (W21) de chaque rainure latérale (21).

2. Pneumatique (1) selon la revendication 1, dans lequel
la largeur (W21) de chaque rainure latérale (21) est de 5 à 15 % d'une largeur de développement de bande de roulement (TW), et
la largeur (W23) de chaque rainure circonférentielle (23) est de 2 à 5 % de la largeur de développement de bande de roulement (TW).

3. Pneumatique (1) selon la revendication 1 ou 2, dans lequel
les blocs de couronne (24) incluent un second bloc de couronne (32), et une paire de secondes fentes (42) sont formées sur le second bloc de couronne (32) de manière à s'étendre sur les deux côtés de l'équateur de pneumatique (C).

4. Pneumatique (1) selon la revendication 3, dans lequel, dans le premier bloc de couronne (31), le second bloc de couronne (32), et les blocs d'épaulement (25), une aire de relief minimum Fmin est de 40 à 80 % d'une aire de relief maximum Fmax.

5. Pneumatique (1) selon l'une quelconque des revendications 1 à 4, dans lequel la pluralité de rainures latérales (21) s'étendent depuis une extrémité de contact au sol de bande de roulement (TE1) jusqu'à une autre extrémité de contact au sol de bande de roulement (TE2) dans la direction axiale du pneumatique.

6. Pneumatique (1) selon l'une quelconque des revendications 1 à 5, dans lequel la pluralité de rainures latérales (21) sont cintrées sur l'équateur de pneumatique (C).

7. Pneumatique (1) selon l'une quelconque des revendications 1 à 6, dans lequel une profondeur de la première fente (41) est de 30 à 70 % d'une profondeur de chaque rainure latérale (2).

8. Pneumatique (1) selon l'une quelconque des revendications 1 à 7, dans lequel la pluralité de rainures latérales (21) incluent des premières portions (211) inclinées dans une première direction vers un côté intérieur dans la direction axiale du pneumatique, et des secondes portions (212) inclinées dans une seconde direction opposée à la première direction, vers le côté intérieur dans la direction axiale.

9. Pneumatique (1) selon la revendication 8, dans lequel la pluralité de portions en relief (22) incluent des portions chanfreinées (51) au niveau de bords de rainure des secondes portions (212).

10. Pneumatique (1) selon la revendication 8 ou 9, dans lequel les secondes portions (212) adjacentes les unes aux autres dans la direction circonférentielle du pneumatique sont agencées de manière à être déplacées dans la direction axiale du pneumatique.
